# EUROPÄISCHE PATENTANMELDUNG

(11) **EP 0 950 885 A2**
(43) Veröffentlichungstag der Anmeldung: **20.10.1999**
(21) Anmeldenummer: 99104734.1
(22) Anmeldetag: 10.03.1999
(51) Int. Cl.: G01L 23/22, F02P 17/12

(54) **Verfahren zur Bestimmung der Laufruhe eines Ottomotors**

(30) Priorität: 15.04.1998 DE 19816641
(71) Anmelder: DaimlerChrysler AG, 70567 Stuttgart (DE)
(72) Erfinder: Hohner, Peter, 70771 Leinfelden-Echterdingen (DE); Schenk, Jürgen, 73095 Albershausen (DE); Wilstermann, Hartung, 74405 Gaildorf (DE)

(57) **Zusammenfassung**

Die vorliegende Erfindung betrifft ein Verfahren zur Bestimmung der Laufruhe eines Ottomotors mittels der Messung des Ionenstromes (I) in wenigstens einem Verbrennungsraum des Ottomotors. Nach erfolgter Zündung der Zündkerze wird an diese eine Meßspannung angelegt, wodurch der Ionenstrom (I) hervorgerufen wird. Nach jeder Ionenstrommessung wird zunächst ein aktueller Ionenstrommittelwert (I_{M}) und anschließend aus einem Referenzwert und dem Ionenstrommittelwert (I_{M}) ein Laufruhewert (L) bestimmt.

## Beschreibung

Die Erfindung betrifft ein Verfahren zur Bestimmung der Laufruhe eines Ottomotors mittels der Messung des Ionenstromes in wenigstens einem Verbrennungsraum des Ottomotors nach erfolgter Zündung der dem Verbrennungsraum zugeordneten Zündkerze, wobei zur Ionenstrommessung an die Zündkerze eine Meßspannung angelegt wird.

Aus der DE 40 15 191 C2, der DE 195 24 539 C1, der DE 195 24 540 C1 und der DE 195 24 541 C1 gehen Einrichtungen hervor, die zur Messung des Ionenstromes im Verbrennungsraum eines Ottomotors dienen. Die Zündkerze dient dabei sozusagen als Messfühler, wobei nach jeder Zündung an die Elektroden der Zündkerze eine Meßspannung angelegt wird, so daß die aufgrund der Verbrennung im Verbrenpungsraum vorhandenen Ionen und Elektronen im elektrischen Feld der Elektroden der Zündkerze beschleunigt werden und den Ionenstrom hervorrufen. Es wird desweiteren darauf hingewiesen, daß der Ionenstrom zur zylinderselektiven Laufruhenregelung verwendet werden kann, wobei konkrete Ausführungen zur Realisierung der Laufruhenregelung fehlen.

Ausgehend hiervon ist es die Aufgabe der vorliegenden Erfindung ein Verfahren zur Bestimmung der Laufruhe eines Ottomotors zu entwickeln, das unter Verwendung der bekannten Einrichtungen zur Messung des Ionenstromes eine zuverlässige Bestimmung der Laufruhe gewährleistet.

Diese Aufgabe wird dadurch gelöst, daß nach jeder Ionenstrommessung zunächst ein aktueller Ionenstrommittelwert bestimmt wird, wobei anschließend aus einem Referenzwert und dem Ionenstrommittelwert ein Laufruhewert ermittelt wird.

Durch die Bildung des Ionenstrommittelwertes aus mehreren einzelnen Ionenstrommessungen kann eine große Genauigkeit des Laufruhewertes erreicht werden. Über die Einbeziehung des Referenzwertes in den Laufruhewert wird eine Bewertung des Ionenstrommittelwertes erreicht, die sich im Laufruhewert niederschlägt.

Vorteilhafte Weiterbildungen des erfindungsgemäßen Verfahrens gehen aus den Unteransprüchen hervor.

Zweckmäßigerweise ist der Referenzwert vom einem Abweichungsmittelwert gebildet, wobei sich die Abweichung aus dem Betrag der Differenz zwischen dem zuletzt gemessenen Ionenstrom und dem aktuellen Ionenstrommittelwert ergibt. Hierbei geht die Differenz zwischen Ionenstrom und Ionenstrommittelwert in den Laufruhewert ein, wodurch die letzte Ionenstrommessung im Bezug auf den bisher bestimmten Ionenstrommittelwert bewertet wird.

Vorteilhafterweise wird der Laufruhewert aus dem integrierten Referenzwert und einer integrierten Ionenstrombewertungsgröße bestimmt, die von dem Ionenstrommittelwert und/oder dem gemessenen Ionenstrom abhängt. Durch die Integralbildung des Referenzwertes bzw. der Ionenstrombewertungsgröße erhält man jeweils einen skalaren Wert aus denen dann der Laufruhewert ermittelt werden kann.

Hierbei kann der Quotient aus integriertem Referenzwert durch integrierte Ionenbewertungsgröße den Laufruhewert angeben, so daß eine Normierung des integrierten Referenzwertes auf die integrierte Ionenbewertungsgröße erfolgt.

Eine besonders einfache Methode zur Bildung des Ionenstrommittelwertes und/oder des Abweichungsmittelwertes besteht in deren Ermittlung mit Hilfe einer Schieberegistereinrichtung, wobei insbesondere in einem ersten Schieberegister mehrere gemessene Ionenstromwerte und in einem zweiten Schieberegister mehrere Abweichungswerte speicherbar sind. Die Mittelwerte werden hierbei aus der Summe der einzelnen Schieberegistereinträge geteilt durch die Anzahl der Schieberegister-Speicherplätze berechnet.

Alternativ hierzu besteht die Möglichkeit den aktuellen Ionenstrommittelwert und/oder den aktuellen Abweichungsmittelwert direkt aus dem jeweils vorhergehenden Mittelwert und dem zuletzt gemessenen Ionenstrom bzw. der aktuellen Abweichung zu bestimmen. Hierbei genügt es lediglich den aktuellen Ionenstrommittelwert bzw. Abweichungsmittelwert zu speichern, so daß hierfür nur eine geringe Speicherkapazität erforderlich ist.

Bei einer weiteren zweckmäßigen Ausgestaltung wird der Laufruhewert zur Steuerung und/oder Regelung wenigstens einer Motorsteuerungseinrichtung wie Abgasrückführungsventil, Einspritzanlage oder Zündanlage verwendet, wodurch sich die Möglichkeit ergibt die Emissionen des Ottomotors bzw. dessen Laufruhe zu optimieren.

Bei einer günstigen Schaltungsanordnung zur Durchführung des Verfahrens erfolgt die Bestimmung des Laufruhewertes in einer Rechnereinheit.

Im folgenden wird das erfindungsgemäße Verfahren anhand der beigefügten Zeichnung näher erläutert. Es zeigen:
- Figur 1: das Blockschaltbild zur Durchführung einer ersten Version des erfindungsgemäßen Verfahrens mit einer Schieberegistereinrichtung und
- Figur 2: das Blockschaltbild zur Durchführung einer zweiten Version des Verfahrens mit direkter Mittelwertbildung aus dem jeweils vorangegangenen Mittelwert.

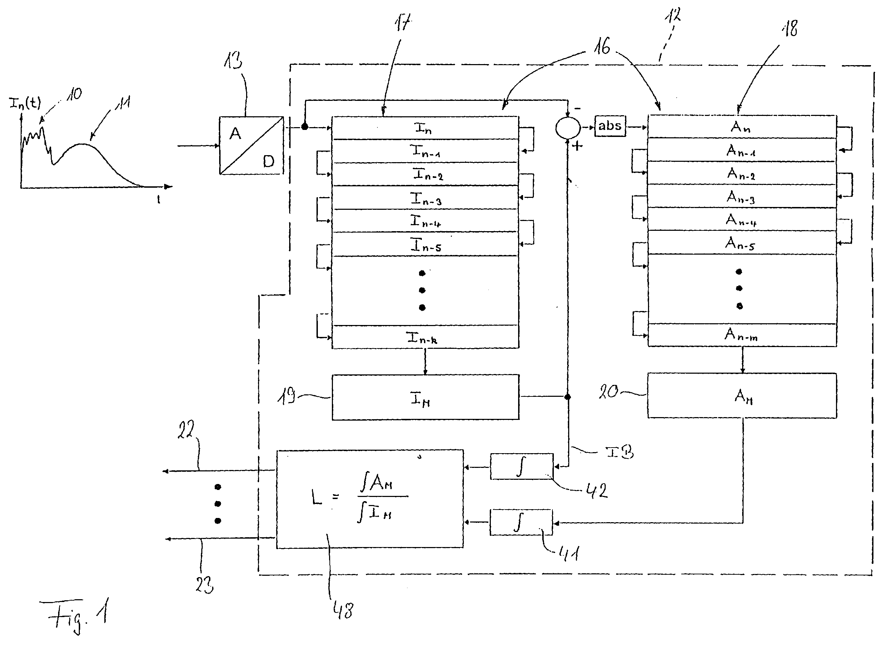

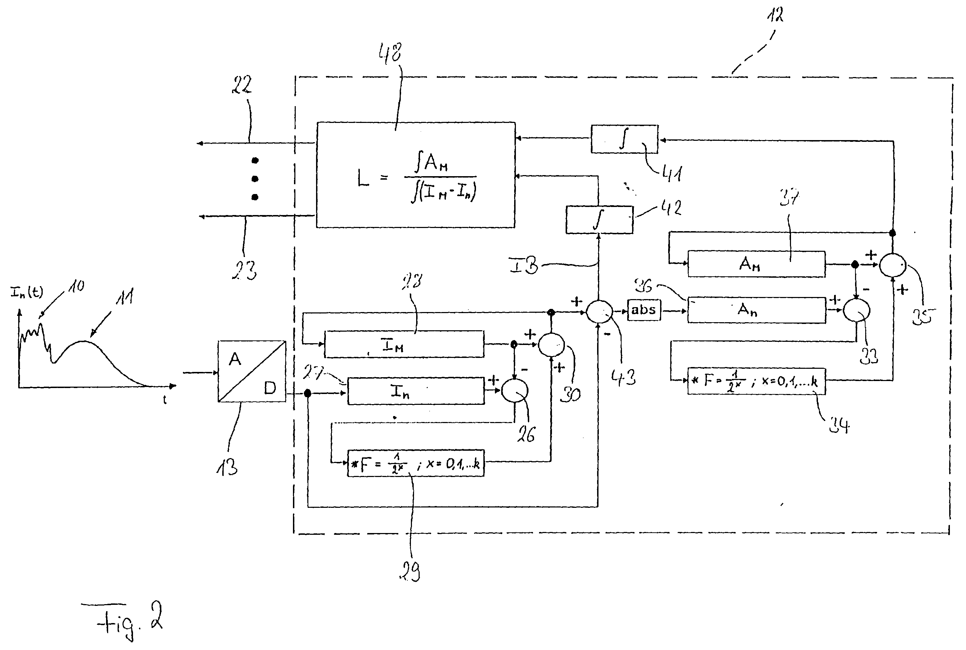

In den Figuren 1 und 2 ist jeweils ein Blockschaltbild zur Durchführung eines Verfahrens zur Bestimmung der Laufruhe eines Ottomotors mit Hilfe der Messung des Ionenstromes I dargestellt. Die Messung des Ionenstromes I erfolgt in wenigstens einem Verbrennungsraum des Ottomotors nachdem die dem Verbrennungsraum zugeordnete Zündkerze gezündet wurde. Bei der im Verbrennungsraum stattfindenden Verbrennung des Kraftstoff-Luft-Gemisches werden Ionen und Elektronen frei. An die Zündkerze wird zur Messung des Ionenstromes eine Meßspannung angelegt, die üblicherweise derart gewählt ist, daß kein weiterer Zündfunke an der Zündkerze entsteht. Zwischen den Elektroden der Zündkerze wird dadurch ein elektrisches Feld ausgebildet, in dem die Ionen und Elektronen beschleunigt werden, wodurch der Ionenstrom I hervorgerufen wird. Dieser Ionenstrom I kann an der Zündkerze gemessen werden.

Nach der Zündung der Zündkerze hat der Ionenstrom einen charakteristischen zeitlichen Verlauf, mit einem ersten Maximum 10 und einem zweiten Maximum 11. Das zeitlich erste Maximum 10 des Ionenstromes I wird durch die hohe Ionisierung im Flammkern verursacht, wobei die Flammkernbildung direkt mit den Zyklusschwankungen des Druckverlaufs im Verbrennungsraum und damit mit der Laufruhe des Ottomotors korreliert. Bei ungünstigen Gemischverhältnissen im Verbrennungsraum, beispielsweise bei zu fettem oder zu magerem Gemisch oder bei zu hohen Restgasanteilen, verläuft die Flammkernbildung verzögert und das erste Maximum 10 des Ionenstromes I liegt bezogen auf einen optimalen Zeitpunkt zeitlich verzögert. Die Entwicklung des ersten Maximums 10 erfolgt demnach zu spät. Desweiteren haben ungünstige Gemischverhältnisse einen geringeren Ionenstromwert im Bereich des ersten Maximums 10 zur Folge, so daß der Ionenstrom I im Bereich seines ersten Maximums 10 zu gering ist. Somit läßt sich aufgrund der zeitlichen Lage und der Größe des ersten Maximums 10 des Zonenstromes I eine Aussage über die Laufruhe des Ottomotors machen.

Die zeitliche Lage des zweiten Maximums 11 des Ionenstroms I kann als Maß für den Zeitpunkt dienen, zu dem im Verbrennungsraum das Maximum des Druckes herrscht, so daß auch das zweite Maximum 11 des Zonenstromes I eine Aussage über die Laufruhe des Ottomotors zuläßt.

Um die Emissionen des Ottomotors optimieren zu können wird häufig eine Abgasrückführung durchgeführt, wobei der Anteil des in den Verbrennungsraum zurückgeführten Abgases, der sogenannte Inertgasanteil, über ein Abgasrückführungsventil gesteuert wird. Dieser Inertgasanteil muß optimiert werden, um möglichst geringe Emissionen beispielsweise von Stickoxiden und unverbrannten Kohlenwasserstoffen zu erzielen. Über die Absenkung der Emissionen kann gleichzeitig ein geringerer Kraftstoffverbrauch erreicht werden.

Durch die Optimierung der Laufruhe werden gleichzeitig die Emissionen und der Verbrauch optimiert, so daß durch das vorliegende Verfahren eine Steuerung oder Regelung von einer oder mehreren Motorsteuerungseinrichtungen wie Abgasrückführungsventil, Einspritzanlage oder Zündanlage durchgeführt werden kann. Hierfür wird ein Laufruhewert L ermittelt, der den unterschiedlichen Motorensteuerungseinrichtungen zugeführt werden kann.

Für gleiche Verfahrensstufen wurden bei beiden im folgenden erläuterte Varianten gleiche Bezugszeichen vergeben.

Die Ermittlung des Laufruhewertes L erfolgt beispielsgemäß in einer Rechnereinheit 12. Der an der nicht näher dargestellten Zündkerze gemessene Ionenstrom I liegt als analoges Stromsignal vor, das zunächst in einem Analog-Digital-Wandler 13 in ein digitales Stromsignal umgewandelt wird, bevor es an die Rechnereinheit 12 zur Weiterverarbeitung weitergeleitet wird.

Zunächst wird nach jeder Ionenstrommessung in der Rechnereinheit 12 ein aktueller Ionenstrommittelwert I_{M} bestimmt, wobei das Verfahren zur Mittelwertbildung grundsätzlich beliebig gewählt werden kann. Der zuletzt gemessene Zonenstrom I ist durch den Index n gekennzeichnet. Für zeitlich früher liegende Messungen wird der Index kleiner (n-1, n-2, ...).

Bei der ersten Version des Verfahrens gemäß Figur 1 verfügt die Rechnereinheit 12 über eine Schieberegistereinrichtung 16, deren erstes Schieberegister 17 zur Speicherung der gemessenen Werte des Ionenstromes I dient. Das erste Schieberegister 17 enthält k Speicherplatze in denen jeweils ein Ionenstromwert I abgelegt werden kann. Es werden daher jeweils die letzten k Ionenstromwerte I gespeichert, wobei die einzelnen Ionenstromwerte I bei der Aufnahme eines neuen Ionenstromwertes Iₙ im ersten Schieberegister 17 um einen Speicherplatz weitergeschoben werden. Der auf dem letzten Speicherplatz abgelegte Ionenstromwert Iₙ₋ₖ wird dabei aus dem ersten Schieberegister 17 hinausgeschoben, so daS es sich bei dem ersten Schieberegister 17 um einen FIFO-Speicher handelt.

Der Ionenstrommittelwert I_{M} wird in einer Mittelwertbildungsstufe 19 aus der Summe der im ersten Schieberegister 17 abgelegten Ionenstromwerte Iₙ, Iₙ-₁, ..., Iₙ-ₖ geteilt durch die Anzahl der gespeicherten Stromverläufe k berechnet.

Im Gegensatz dazu erfolgt die Ermittlung des Ionenstrommittelwertes I_{M} beim zweiten Verfahren nach Figur 2 derart, daß in einer Differenzstufe 26 zunächst die Differenz aus dem zuletzt gemessenen Ionenstromwert Iₙ, der beipspielsgemäß in einem Eingangsspeicher 27 zwischengespeichert ist, minus dem bisherigen, in einem Speicher 28 der Rechnereinheit 12 gespeicherten Ionenstrommmittelwert I_{M} bestimmt wird. Diese Differenz wird innerhalb einer nachfolgenden Gewichtungsstufe 29 mit einem Faktor F gewichtet, der beispielsgemäß gleich 1/2^{x} ist, wobei x die Werte 0,1, ..., k annehmen kann. Die gewichtete Differenz wird anschließend mittels einer Additionsstufe 30 zum seitherigen Ionenstrommittelwert I_{M} addiert, woraus sich der neue Ionenstrommittelwert I_{M} ergibt, der dann im Speicher 28 der Rechnereinheit 12 gespeichert wird. Der aktuelle Ionenstrommittelwert I_{M} wird somit direkt aus dem bisherigen Mittelwert und dem zuletzt gemessenen Ionenstromwert Iₙ bestimmt.

Bei beiden Versionen des erfindungsgemäßen Verfahrens ergibt sich der Laufruhewert aus dem aktuellen Ionenstrommittelwert und einem Referenzwert, der zur Bewertung des Ionenstrommittelwertes I_{M} dient.

Bei den beiden hier näher erläuterten Versionen des Verfahrens ist der Referenzwert von einem Abweichungsmittelwert A_{M} gebildet. Die Abweichung A ergibt sich dabei aus dem Betrag der Differenz zwischen dem zuletzt gemessenen Zonenstromwert Iₙ und dem aktuellen Ionenstrommittelwert I_{M}. Sie ist ein Maß für die Schwankung des Ionenstromwertes I bezüglich seines Mittelwertes I_{M}.

Bei der ersten Version des Verfahrens, wie es in Figur 1 dargestellt ist, wird der Abweichungsmittelwert A_{M} mit Hilfe eines zweiten Schieberegisters 18 der Schieberegistereinrichtung 16 bestimmt, wobei das zweite Schieberegister m Speicherplätze für die Abweichungen A aufweist. Die Ermittlung des Abweichungsmittelwertes A_{M} erfolgt analog zur Bestimmung des Ionenstrommittelwertes I_{M} mittels einer dem zweiten Schieberegister zugeordnete Mittelwertbildungsstufe 20. Die Speichertiefe der beiden Schieberegister 17, 18 ist prinzipiell beliebig wählbar, wobei eine größere Anzahl von Speicherplätzen die Genauigkeit des jeweiligen Mittelwertes I_{M}, A_{M} erhöht.

Gemäß des Blockschaltbildes aus Figur 2 wird der aktuelle Abweichungsmittelwert A_{M} bei dieser zweiten Verfahrensvariante direkt aus dem vorhergehenden, in der Rechnereinheit 12 abgelegten Abweichungsmittelwert A_{M} und der aktuellen Abweichung Aₙ bestimmt. Die Berechnung verläuft analog zu der Bestimmung des Ionenstrommittelwertes I_{M} bei dieser Ausführungsform des Verfahrens, mit Hilfe der Stufen 33, 34, 35, die den Stufen 26, 29, 30 entsprechen, und den Speichern 36, 37 die den Speichern 27, 28 entsprechen. Auf eine detaillierte Erläuterung wird an dieser Stelle verzichtet .

Allgemein werden die Mittelwerte des Ionenstromes I und der Abweichung A bei dieser zweiten Verfahrensform sozusagen durch eine Tiefpaßfilterung gebildet. Der Faktor F gibt hierbei die Stärke der Glättung an, wobei sich für x = o der Faktor F = 1 ergibt, was eine geringe Glättung bedeutet. Für ansteigende Werte von x wird der Faktor F geringer und somit die Glättung größer. Es ist in Abwandlung zu dieser Ausführungsform des Verfahrens auch möglich ein beliebiges anderes Verfahren zur Glättung einzusetzen, um die Mittelwerte I_{M}, A_{M} zu erhalten.

Beiden Verfahrensvarianten ist gemeinsam, daß der Laufruhewert L aus dem in einer Integrierstufe 41 integrierten Referenzwert, der beispielsgemäß vom Abweichungsmittelwert A_{M} gebildet ist, und einer in einer Integrierstufe 42 integrierten Ionenstrombewertungsgröße IB bestimmt wird. In der Form gemäß Figur 1 entspricht die Ionenstrombewertgungsgröße IB dem Ionenstrommittelwert I_{M}. Im Gegensatz dazu berechnet sich die Ionenstrombewertungsgröße IB bei der zweiten Ausführungsvariante des erfindungsgemäßen Verfahrens gemäß Figur 2 mittels einer Differenzierstufe 43 aus der Differenz des Ionenstrommittelwertes I_{M} minus dem zuletzt gemessenen Ionenstrom Iₙ. Die Ionenstrombewertungsgröße IB kann sowohl positive als auch negative Werte annehmen, wobei ihr Betrag gleich der zuletzt bestimmten Abweichung Aₙ ist.

In beiden Fällen wird der Laufruhewert L in Abhängigkeit vom integrierten Abweichungsmittelwert A_{M} und der integrierten Ionenstrombewertungsgröße IB in der Rechnereinheit 12 ermittelt. Beispielsgemäß erfolgt dies durch die Bildung des Quotienten innerhalb einer Divisionsstufe 48 aus dem integrierten Referenzwert, also dem integrierten Abweichungsmittelwert A_{M} durch die integrierte Ionenstrombewertungsgröße IB.

Der Laufruhewert L wird an einem oder mehreren Ausgängen 22, 23 der Rechnereinheit 12 ausgegeben, und beispielsweise wenigstens einer Motorsteuerungseinrichtung zugeführt. Wie bereits erwähnt kann dadurch zum Beispiel die Regelung des Abgasrückführungsventils insbesondere bei Ottomotoren mit stöchometrischem Kraftstoff-Luft-Verhältnis realisiert werden. Ein besonderer Vorteil der Regelung von Motorsteuerungseinrichtungen mittels des vorliegenden Verfahrens ist darin zu sehen, daß am Zylinderkopf, an dem die Ionenstrommessung erfolgt, keine konstruktiven Veränderungen vorgenommen werden müssen, da die bereits vorhandene Zündkerze als Sensor zur Messung des Ionenstromes I verwendet wird.

Als weitere Anwendung des erfinderungsgemäßen Verfahrens könnte bei Magermotoren deren Laufgrenze bestimmt werden.

Die einzelnen Stufen des Verfahrens werden bei beiden Varianten durch Funktionen innerhalb der Rechnereinheit 12 realisiert und stellen beispielsgemäß keine separaten Baugruppen dar.

## Patentansprüche

1. Verfahren zur Bestimmung der Laufruhe eines Ottomotors mittels der Messung des Ionenstromes (I) in wenigstens einem Verbrennungsraum des Ottomotors nach erfolgter Zündung der dem Verbrennungsraum zugeordneten Zündkerze, wobei zur Ionenstrommessung an die Zündkerze eine Meßspannung angelegt wird, dadurch gekennzeichnet, daß nach jeder Zonenstrommessung zunächst ein aktueller Ionenstrommittelwert (I_{M}) bestimmt wird, wobei anschließend aus einem Referenzwert und dem Ionenstrommittelwert (I_{M}) ein Laufruhewert (L) ermittelt wird.

2. Verfahren nach Anspruch 1, dadurch gekennzeichnet, daß der Referenzwert von einem Abweichungsmittelwert (A_{M}) gebildet ist, wobei sich die Abweichung aus dem Betrag der Differenz zwischen dem zuletzt gemessenen Ionenstrom (I) und dem aktuellen Ionenstrommittelwert (I_{M}) ergibt.

3. Verfahren nach Anspruch 1 oder 2, dadurch gekennzeichnet, daß der Laufruhewert (L) aus dem integrierten Referenzwert und einer integrierten Ionenstrombewertungsgröße (IB) bestimmt wird, die von dem Ionenstrommittelwert (I_{M}) und/oder dem gemessenen Ionenstrom (I) abhängt.

4. Verfahren nach Anspruch 3, dadurch gekennzeichnet, daß der Quotient aus integriertem Referenzwert durch die integrierte Ionenstrombewertungsgroße (IB) den Laufruhewert (L) angibt.

5. Verfahren nach Anspruch 3 oder 4, dadurch gekennzeichnet, daß die Ionenstrombewertungsgröße (IB) vom integrierten Ionenstrommittelwert (I_{M}) gebildet ist.

6. Verfahren nach Anspruch 3 oder 4 , dadurch gekennzeichnet, daß die Ionenstrombewertungsgröße (IB) aus dem Differenzwert von Ionenstrommittelwert (I_{M}) minus dem zuletzt gemessenen Ionenstrom (Iₙ) gebildet ist.

7. Verfahren nach einem der Ansprüche 1 bis 6, dadurch gekennzeichnet, daß die Bildung des Ionenstrommittelwertes (I_{M}) und/oder des Abweichungsmittelwertes (A_{M}) mit Hilfe einer Schieberegistereinrichtung (16) erfolgt.

8. Verfahren nach Anspruch 7, dadurch gekennzeichnet, daß in einem ersten Schieberegister (17) der Schieberegistereinrichtung (16) mehrere gemessene Ionenströme (I) und in einem zweiten Schieberegister (18) der Schieberegistereinrichtung (16) mehrere Abweichungswerte (A) speicherbar sind

9. Verfahren nach einem der Ansprüche 1 bis 8, dadurch gekennzeichnet, daß der aktuelle Ionenstrommittelwert (I_{M}) und/oder der aktuelle Abweichungsmittelwert (A_{M}) direkt aus dem jeweils vorhergehenden Mittelwert und dem zuletzt gemessenen Ionenstrom (Iₙ) und/oder der aktuellen Abweichung (Aₙ) bestimmt werden.

10. Verfahren nach einem der Ansprüche 1 bis 9, dadurch gekennzeichnet, daß der Laufruhewert (L) zur Steuerung und/oder Regelung wenigstens einer Motorsteuerungseinrichtung verwendet wird.

11. Verfahren nach einem der Ansprüche 1 bis 10, dadurch gekennzeichnet, daß die Bestimmung des Laufruhewertes (L) in einer Rechnereinheit (12) erfolgt.

12. Verfahren nach Anspruch 11, dadurch gekennzeichnet, daß es sich bei dem an der Zündkerze gemessenen Ionenstrom (I) um ein analoges Stromsignal handelt, das zunächst in eine digitales Stromsignal umgewandelt und anschließend der Rechnereinheit (12) zugeführt wird.
